# EUROPEAN PATENT APPLICATION

(11) **EP 0 618 042 A1**
(43) Date of publication of application: **05.10.1994**
(21) Application number: 94302225.1
(22) Date of filing: 28.03.1994
(51) Int. Cl.: B24C 9/00

(54) **Blasting apparatus**

(30) Priority: 29.03.1993 GB 9306501
(71) Applicant: BTR plc, London SW1P 2PL (GB)
(72) Inventor: Lester, Derek Anthony, Slough, Berkshire (GB)
(74) Representative: Sparrow, Alvar Alfred

(57) **Abstract**

Blasting apparatus using abrasive media is provided having reduced floor space and improved accessibility for maintenance purposes. The invention provides a blasting apparatus (10) comprising a blast media storage hopper (12) integral with a collector compartment (13) for dust and other debris. The apparatus may comprise an integral cabinet (10) having a working compartment (11) with a perforated floor (26) above the storage hopper (12) and collector compartment (13) and abrasive media separation means (30) may be provided below floor (26).

## Description

This invention relates to blasting apparatus using abrasive media.

Blasting apparatus conventionally comprises a housing such as a cabinet in which the workpiece to be blasted is bombarded with abrasive material, a supply hopper to contain the abrasive material, means to supply the abrasive material to the cabinet and a separate collector for the debris from the process. Such apparatus has problems of occupying a considerable space, need for interconnecting hoses and wires, and poor accessibility for maintenance purposes.

It is an object of the invention to provide an improved blasting apparatus which can be more compact and more readily accessible for maintenance.

It is a further object of the invention to provide an improved means of separating used abrasive material from dust and debris formed during the blasting process.

Accordingly, the invention provides a blasting apparatus comprising a blast media storage hopper integral with a collector compartment for dust and other debris.

Conveniently the apparatus may be an integral cabinet having a working compartment to contain the workpiece to be blasted, the storage hopper and the collector compartment. Normally the working compartment will be above the storage hopper and collector compartment and will have a perforated floor through which used abrasive material and dust and other debris from the blasting process falls.

The cabinet below the working compartment may be divided diagonally to provide the desired separate storage hopper and collector compartment.

The working compartment may be provided with a viewing window, lighting, operator gauntlets and a blast gun as used conventionally.

The means to supply the blast gun with abrasive material from the storage hopper may also be any conventionally used means. For example, a pneumatic device as described in our British Patent No. 1,412,693 may be used. This device employs a duplex tube in which the outer tube has an open lower end which is positioned beneath the surface of the abrasive material in the storage hopper and an inner tube having an open lower end spaced longitudinally inwards from the open lower end of the outer tube. A flow restrictor is positioned in the outer tube adjacent the lower end of the inner tube whereby when gas, e.g. air, is fed down the outer tube and then changes direction to travel up the inner tube, local turbulence is caused by the restrictor. The restriction also causes an increase in gas flow velocity whereby the overall effect is to increase fluidisation of the abrasive material and to improve the supply of abrasive material up the inner tube to a suitable blast gun.

The invention will now be further described by way of example only with reference to the accompanying drawings in which:
Figure 1 is a diagrammatic representation of an integral apparatus of the invention shown in front view; and
Figure 2 is a schematic side sectional view with parts cut away of the apparatus of Figure 1.

As shown, the blasting apparatus of the invention comprises an integral cabinet 10. The upper part of cabinet 10 houses the working compartment 11 and the lower part is divided into a storage hopper 12 for abrasive media and a debris and dust collector compartment or plenum 13. Hopper 12 and collector compartment 13 are separated by a diagonal wall 14.

The front wall of the lower part of the apparatus is angled inwardly from top to bottom.

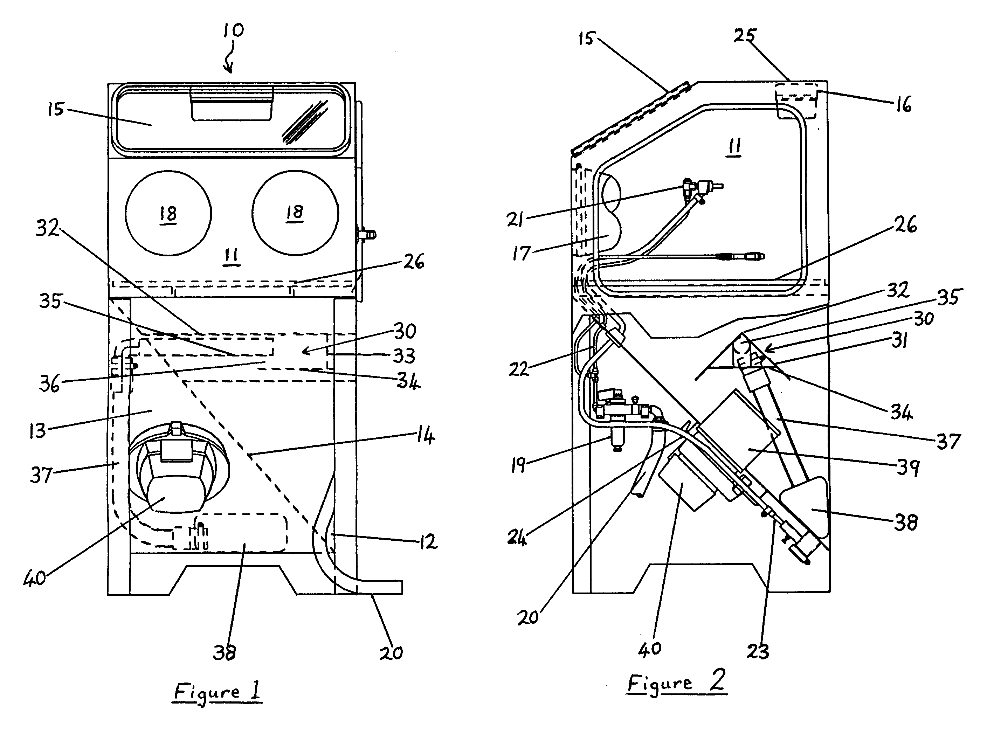

Referring now to the working compartment 11, this is provided with a sloping viewing window 15, a light 16 and a pair of gauntlets 17 (one only indicated in Figure 2) accessible from the outside by holes 18 in the front of the cabinet, and a gun 21.

The apparatus is connected to a supply of compressed air via a hose 20 connected to regulator 19 whereby air pressure may be regulated to an optimum desired working pressure, e.g. between 15 and 100 pounds per square inch. Moisture is extracted from the compressed air supply prior to being passed to regulator 19 by conventional means (not shown).

A hose 22 supplies air to the gun 21 where a venturi device (not shown) inside the gun creates a high vacuum. The vacuum lifts abrasive media (not shown) from storage hopper 12 through duplex lifting tube 23 and hose 24 to the gun. On arrival at the gun 21 the abrasive media is mixed with and accelerated by the compressed air so that an abrasive stream exits the gun and impinges onto the surface of a component workpiece placed in compartment 11. The suction gun 21 is held by the operator through a gauntlet 17, while the blasting process is observed through the window 15 and illuminated by light 16.

Air is drawn through a slot 25 in the roof of the cabinet 10 above the lamp 16 and passes downwardly over light 16, thereby dissipating heat from the light before passing further into working compartment 11. The downward movement of air collects the abrasive, dust and debris generated in compartment 11.

The floor of compartment 11 is in the form of a plate 26 through which used abrasive media, debris and dust can gravitate into the lower half of cabinet 10.

Immediately below plate 26 in the top part of the lower half of cabinet 10 is located an abrasive media separation means 30. This comprises an inverted V-section plate 31, i.e. with its apex 32 uppermost, extending across the cabinet. Abrasive media slides over the external surface of plate 31 and the heavy media falls into storage hopper 12 below. Fine media and dust, however, is drawn into the separation means 30 in the region underneath the apex 32 of the plate 31. A vertical plate 33 depends from apex 32 of plate 31 inside the inverted V from a position adjacent one side of the cabinet and is attached to a horizontal baffle plate 34 extending partway across the width of the cabinet. A tube 35 extends from adjacent the other side of the cabinet underneath the apex 32 of plate 31 but at a higher level than baffle plate 34. Tube 35 extends sufficiently to overlap the innermost end of baffle plate 34 whereby an orifice 36 is defined between the baffle plate and the lower outer wall of tube 35.

The other end of tube 35 is connected via a flexible lightweight hose 37 to provide a passage through dividing wall 14 to the collector compartment 13. A dust and debris collection bag 38 in compartment 13 receives the other end of hose 37. Air is drawn through the walls of collection bag 38 and into a filter cartridge 39 in chamber 13. Finer dust particles, which also pass through the walls of bag 38, are then deposited on the walls of cartridge 39 so that only filtered air is sucked to atmosphere through fan and motor assembly 40 to which cartridge 39 is attached through the front wall of the apparatus. Thus a two-stage filtering is used.

It will be appreciated, therefore, that fine media debris and dust passing through floor 26 is drawn into the separation means 30 and passes through orifice 36 into tube 35 and is thereby separated from the good reusable abrasive. This debris and dust is prevented from re-entering hopper 12 by means of the vertical end plate 33. The labyrinth effect here can remove fine media debris so that the majority of material entering tube 35 is dust. The air/media speed may reduce momentarily before entering tube 35 and may increase through the tube before entering compartment 13. Thus the media separation means effectively air-washes the abrasive media as it passes down from the working compartment of the apparatus to separate it from the dust and other debris.

The fan and motor assembly 40 can be attached to the apparatus by a clamping arrangement requiring no tooling and is easily removed to allow access to the collector compartment 13 where collection bag 38 can be disconnected and removed for emptying or cleaning. Minute particles of dust collected at the bottom of compartment 13 can be removed by vacuum-cleaning before replacement of bag 38 and assembly 40.

The apparatus is compact and convenient to operate and to maintain. It takes up relatively little floor space, i.e. it has a small "foot-print", and so may be located in a variety of different locations. By way of example only, a small cabinet may have internal dimensions of about 720 x 750 x 590 (height) mm and external dimensions of about 740 x 755 x 1500 (height) mm. The apparatus is also suitable for use in larger cabinets for instance those having volumes of about 1.2 or 1.5 m³.

The media separation means requires no adjustment for a variety of types and sizes of commonly used abrasives.

## Claims

1. A blasting apparatus (10) comprising a blast media storage hopper (12) and a collector compartment (13) for dust and other debris, characterised in that the storage hopper (12) and the collector compartment (13) are formed integrally.

2. A blasting apparatus according to Claim 1, characterised in that the apparatus comprises an integral cabinet (10) having a working compartment (11) to contain the workpiece to be blasted, the working compartment (11) being situated above the storage hopper (12) and the collector compartment (13).

3. A blasting apparatus according to Claim 2, characterised in that the cabinet (10) below the working compartment (11) is divided by a diagonal wall (14) to provide the storage hopper (12) and the collector compartment (13).

4. A blasting apparatus according to any preceding claim, characterised in that the working compartment (11) contains a blast gun (21) supplied with abrasive media from the hopper (12) by means of a duplex tube (23), the tube (23) having an outer tube with an open lower end to be positioned below the surface of the abrasive media, and an inner tube having an open lower end spaced inwardly from the open lower end of the outer tube, a flow restrictor being positioned in the outer tube adjacent the lower end of the inner tube.

5. A blasting apparatus according to Claim 2, 3 or 4, characterised in that the floor (24) of the working compartment (11) is a perforated plate beneath which is located an abrasive media separation means (30) to allow abrasive media to fall into storage hopper (12) and to divert dust and other fine debris into the collector compartment (13).

6. A blasting apparatus according to Claim 5, characterised in that the abrasive media separation means (30) comprises an air flow and labyrinth baffle means (31, 32, 33, 34, 36) to divert the dust and other fine debris.

7. A blasting apparatus according to Claim 5 or 6, characterised in that an inverted V-section plate (31) with its apex (32) uppermost extends beneath the floor (26) and the labyrinth baffle means is positioned underneath the apex (32).

8. A blasting apparatus according to Claim 7, in which a hollow tube (35) extends underneath the apex (32) of the plate (31) and is connected at one end to a dust collection bag (38) in collector compartment (13) and its other end opens inside the labyrinth baffle means (31, 32, 33, 34, 36) to receive the diverted dust.

9. A blasting apparatus according to Claim 8, characterised in that the baffle means comprises a substantially vertical plate (33) depending from the apex (32) and a substantially horizontal plate (34) extending from the lower end of the plate (33), the plate (34) passing underneath the end of the tube (35) to provide an orifice (36) between the plate (34) and the lower outer wall of the tube (35), the orifice (36) allowing entry of dust and fine debris in towards the open end of the tube (35).

10. A blasting apparatus according to any one of Claims 6 to 9, characterised in that a motor and fan assembly (40) is attached to the collector compartment (13) to provide the required air flow.

11. A blasting apparatus according to Claim 10, characterised in that a filter cartridge (39) is attached to the inner wall of the collector compartment (13) adjacent the motor and fan assembly (40) whereby air is drawn through the cartridge (39) to atmosphere.
